# EUROPÄISCHE PATENTANMELDUNG

(11) **EP 1 253 317 A2**
(43) Veröffentlichungstag der Anmeldung: **30.10.2002**
(21) Anmeldenummer: 02009103.9
(22) Anmeldetag: 24.04.2002
(51) Int. Cl.: F03D 3/04, F03D 3/02, F03D 9/00

(54) **Windkraftanlage**

(30) Priorität: 24.04.2001 DE 10120181
(71) Anmelder: Groppel, Wilhelm, 49324 Melle (DE)
(72) Erfinder: Groppel, Wilhelm, 49324 Melle (DE)
(74) Vertreter: Kewitz, Ansgar

(57) **Zusammenfassung**

Die Erfindung betrifft eine Windkraftanlage, die sich auf einem Lagerring (19) um einen Mast (22) erstreckt, mit zwei Rotoren (11), die Rotorblätter (12) aufweisen, wobei die Rotoren (11) beidseitig vom Mast (22) und rotierbar auf dem Lagerring (19) angeordnet sind, mit einem Luftlenkblech (15), dass sich bereichsweise um den Mast (22) erstreckt und rotierbar auf dem Lagerring (19) angeordnet ist, wobei das Luftlenkblech (15) so ausgerichtet ist, dass die gegen den Mast strömende Luft (23) auf die Rotorblätter (12) umgleitet wird.

## Beschreibung

Die Erfindung betrifft eine Windkraftanlage zur Erzeugung von elektrischer Energie.

Im Zuge der immer stärker werdenden Nutzung von alternativen Energien steigt der Bedarf an geeigneten Aufstellungsorten für diese Vorrichtungen. Windkrafträder können nur in Küstennähe oder auf exponierten höhergelegenen Orten betrieben werden, wenn ein wirtschaftlicher Betrieb beabsichtigt wird. Diese Bereiche sind jedoch schon zu einem Großteil durch Windkraftanlagen belegt.

Eine zusätzliche Nutzung dieser Aufstellungsorte ist aufgrund der Größe der Windkrafträder oftmals nicht möglich. Der Raumverbrauch stellt eines der größten Hindernisse beim Aufstellen der Windkrafträder dar.

Ein weiterer gewichtiger Nachteil der Windkraftanlagen, die einen großen Rotor aufweisen, ist der durch die Rotorblätter erzeugte Schattenschlag. Der Schattenschlag tritt immer dann auf, wenn durch die Sonneneinstrahlung aufgrund der Rotorstellung ein Schatten entsteht. Bei einer Rotation werfen die Rotorblätter in einem festen Zeitintervall einen wiederkehrenden Schatten. Dieser Schattenschlag engt das Gebiet für mögliche Installationen der Windkrafträder ein. In bewohnten Gebieten führt der Schattenschlag vermehrt zu Klagen in der Bevölkerung. Diese hat oftmals physische und psychische Probleme, die durch den Schattenschlag der Rotoren hervorgerufen werden.

Aufgabe der Erfindung ist es, die bereits bestehenden Windkraftanlagen so zu erweitern, dass eine bessere Ausnutzung der Windenergie ermöglicht wird.

Diese Aufgabe wird durch die Erfindungen gemäß den unabhängigen Ansprüchen gelöst. Vorteilhafte Weiterbildungen der Erfindungen sind in den Unteransprüchen gekennzeichnet.

Die Aufgabe wird insbesondere durch eine Windkraftanlage gelöst, die sich auf einem Lagerring um einen Mast erstreckt. Der Lagerring hat die Aufgabe die erfindungsgemäße Windkraftanlage so auszurichten, dass die auf ihr befestigten Rotoren optimal gegen die Windrichtung ausgerichtet sind. Die Windkraftanlage weist weiterhin mindestens zwei Rotoren auf, die Rotorblätter aufweisen. In einer bevorzugten Ausführungsform handelt es sich um schaufelradförmige Rotorblätter. Die Rotorblätter können auch die Form eines Propellerblattes aufweisen, wobei in diesem Falle die Rotorachse um neunzig Grad gedreht werden muss.

Die Rotoren sind beidseitig vom Mast positioniert. Die Anordnung der Rotoren muss hierbei nicht symmetrisch sein. Die Achsen der Rotoren können auch etwas hinter bzw. vor dem Mast angeordnet sein.

1.Die Rotoren sind auf dem Lagerring angeordnet, der sich um den Mast erstreckt. Die Rotoren können sich somit um 360 Grad um die Achse des Mastes drehen. Hierdurch wird sichergestellt, dass die Rotoren gegen die Windrichtung ausgerichtet werden. Ein Luftlenkblech hat die Aufgabe, den Wind optimal auf die Rotoren zu leiten. Das Luftlenkblech ist vor dem Mast angeordnet, wodurch der auf den Mast strömende Wind um den Mastkörper geleitet werden kann. Das Luftlenkblech erstreckt sich bereichsweise um den Mast. Es ist vorzugsweise auf dem Lagerring (19) angeordnet, wodurch eine Rotation sichergestellt wird. Je nach Ausrichtung der Rotoren wird ein unterschiedlicher Teil des Mastes verkleidet. Das Luftlenkblech ist hierbei so ausgebildet, dass möglichst eine Gleichverteilung der auf die Rotoren strömenden Luft sichergestellt wird. Das Luftlenkblech kann entweder spitz zulaufen oder abgerundet sein. In einer möglichen Form ist das Luftlenkblech im Scheitelpunkt spitz zulaufend ausgebildet, um den auf den Mast strömenden Luftstrom aufzuteilen. Die Form des Luftlenkbleches sollte jedoch immer so sein, dass die gegen den Mast strömende Luft auf die Rotorblätter umgleitet wird.

In einer vorteilhaften Ausführungsform sind die Rotoren in einer Verkleidung angeordnet, wobei die Verkleidung Lufteintrittsöffnungen und Luftaustrittsöffnungen aufweist. Hierbei sollte die Fläche der Luftaustrittsöffnungen geringer sein als die Fläche der Lufteintrittsöffnungen, um einen Sogeffekt auszulösen. Durch den Sogeffekt kann die Effizienz der Anordnung gesteigert werden. Der Sog führt zu einer Beschleunigung der Luft innerhalb der Verkleidung, wodurch die Rotoren beschleunigt werden.

Zur Regelung der Luftmenge, die durch die Verkleidung strömt, ist ein Luftmengenbegrenzer vorgesehen. Der Luftmengenbegrenzer ist vorzugsweise in Form eines Blechs ausgebildet, dass zwischen dem Rotor und der Lufteintrittsöffnung angeordnet ist. Durch einen Antrieb wird der Luftmengenbegrenzer in den Luftstrom geführt. Der Luftmengenbegrenzer ist vorzugsweise als kreisförmiges Segment ausgebildet, das sich bereichsweise um den Rotor erstreckt.

In einer ersten Ausführungsform ist die Rotorachse parallel zum vertikal ausgerichteten Mast angeordnet, wobei der Rotor die Form eines Schaufelrades aufweist. Es ist jedoch auch vorstellbar, dass die Rotorachse horizontal zum vertikal ausgerichteten Mast angeordnet ist, wobei der Rotor die Form eines Propellers aufweist. In diesem Falle würde der Luftmengenbegrenzer eine andere Form aufweisen. Der Luftmengenbegrenzer ist hierbei vorzugsweise als gerades Blech ausgebildet, das sich vor die Rotorblätter schiebt. Es ist jedoch auch denkbar, die Rotorblätter drehbar auszubilden, sodass durch einen Stellwinkel bestimmt werden kann, wie groß der Luftwiderstand sein soll, den der Rotor ausübt.

Die Ausrichtung der Rotoren auf dem Lagerring wird vorzugsweise durch einen Mitnehmer realisiert, der mit dem: Generator der bestehenden Windkraftanlage in Verbindung steht. So kann der Mitnehmer z. B. als Treppe ausgebildet sein, die sich-vom Generatorgehäuse der bestehenden Windkraftanlage zum Lagerring erstreckt. Somit wird eine Kollision des drehbar gelagerten Generatorgehäuses der bereits vorhandenen Windkraftanlage mit den auf dem Lagerring drehbar gelagerten Rotoren vermieden.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1: die Seitenansicht einer bekannten Windkraftanlage in Kombination mit einer erfindungsgemäßen Windkraftanlage, die unterhalb des Generators der bestehenden Windkraftanlage angeordnet ist und mit der bekannten Windkraftanlage mit einem Mitnehmer in Form einer Leiter verbunden ist;
- Fig. 2: die Vorderansicht der Windkraftanlage nach Figur 1, wobei der Verkleidung der erfindungsgemäßen Windkraftanlage Lufteintrittsöffnungen zu entnehmen sind;
- Fig. 3: die schematische Draufsicht der Windkraftanlage nach Figur 1, wobei die Generatoren und die Rotoren zu erkennen sind, die in Wirkverbindung stehen;
- Fig. 4: die detaillierte Draufsicht der erfindungsgemäßen Windkraftanlage, die um einen Mast angeordnet ist, die Rotoren aufweist, die innerhalb einer Verkleidung angeordnet sind, wobei die Verkleidung Lufteintrittsöffnungen und eine Luftaustrittsöffnung aufweist;

Im Rahmen der Erfindung sind zahlreiche Abwandlungen und Weiterbildungen der beschriebenen Ausführungsbeispiele verwirklichbar. Eine mögliche Ausführung wird anhand der beiliegenden Figuren beschrieben.

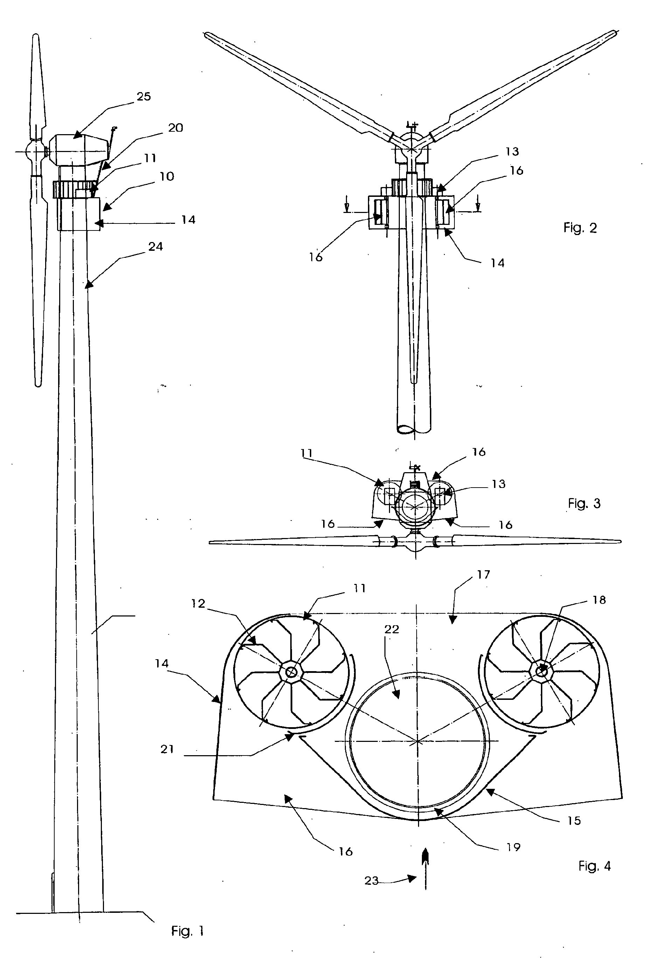

Figur 1 zeigt die erfindungsgemäße Windkraftanlage 10, die unter einer bekannten Windkraftanlage 24 befestigt ist. Die Befestigung wird mit Hilfe eines Lagerrings 19 erreicht, der sich um den Mast 22 der bekannten Windkraftanlage 24 erstreckt. Der Lagerring weist vorzugsweise Befestigungselemente auf, die in Form von Stegen vom Lagerringinneren zur Außenseite das Mastes geführt sind. Die Stege können von variabler Länge sein, sodass die erfindungsgemäße Vorrichtung an eine Vielzahl von Masten mit unterschiedlichen Querschnitten angepasst werden kann.

Der Lagerring trägt zwei Rotoren 10, die eine Vielzahl von Rotorblättern 11 aufweisen. Durch die Verwendung eines Lagerrings 19 wird sichergestellt, dass die erfindungsgemäße Windkraftanlage 10 optimal gegen den Wind ausgerichtet wird. Die Ausrichtung der Windkraftanlage 10 wird durch einen Mitnehmer 20 erreicht, der mit dem beweglich angeordneten Generatorgehäuse 25 der bekannten Windkraftanlage 24 verbunden ist. Der Der Mitnehmer kann vorzugsweise als Leiter ausgebildet sein, sodass eine Wartung der erfindungsgemäßen Windkraftanlage 10 erfolgen kann. Der Ausstieg aus dem Generatorgehäuse 25 der bekannten Windkraftanlage 24 kann über eine Klappe erfolgen, die eine Nutzung der Leiter zulässt.

Fig. 2 ist zu entnehmen, dass die Windkraftanlage 10 eine Verkleidung 14 aufweist, die Lufteintrittsöffnungen 16 und eine Luftaustrittsöffnung 17 aufweist. Zwischen den Lufteintrittsöffnungen 16, die sich rechts und links des Mastes erstrecken, befindet sich ein Luftlenkblech 15, das den Wind derart aufteilt, dass beide Rotoren, die sich hinter den Lufteintrittsöffnungen 16 befinden, mit der gleichen Menge an Luft beaufschlagt werden.

Eine detailliertere Beschreibung des Luftlenkbleches 15 ist der Figur 4 zu entnehmen. Eine mögliche Ausführungsform des Luftlenkbleches weist einen um den Mast gebogenen Querschnitt auf. In einer anderen möglichen Einführungsform läuft das Luftlenkblech im Scheitelpunkt spitz zu. Der Scheitelpunkt befindet sich in der Regel in der radialen Mitte des Mastes. Eine andere mögliche Ausführungsform läuft im Scheitel . Hierdurch weist das Luftlenkblech einen Querschnitt auf, der dem eines Dreiecks entspricht.

Der Figur 4 ist weiterhin zu entnehmen, dass die Rotoren 11 auf Rotorachsen 18 angeordnet sind. Die Rotorachsen sind wiederum mit dem Lagerring 19 verbunden. Die Rotoren 11 weisen Rotorblätter 12 auf, die vorzugsweise - nicht dargestellte-Aussparungen aufweisen, um so den Luftzug zu optimieren. In einer weiteren Ausführungsform erstrecken sich die Rotorblätter 12 nicht vollständig bis zur Rotorachse 18. Vielmehr befindet sich ein Großteil des Rotorblattes 12 im Randbereich des Rotors 11.

Der Figur 3 sind Generatoren 13 zu entnehmen, die mit den Rotorachsen 18 in Verbindung stehen. Durch die Generatoren wird Strom erzeugt. Die Umwandlung dieses Stroms für die Nutzung im öffentlichen Netz kann durch die Transformatoren der bestehenden Windkraftanlage 24 erfolgen.

Um die Luftmengen zu steuern, die durch die Verkleidung 14 strömen, ist ein Luftmengenbegrenzer 21 vorgesehen, der sich vor die Rotoren 11 schieben lässt. Der Luftmengenbegrenzer 21 ist der Figur 3 zu entnehmen. Der Luftmengenbegrenzer 21 weist einen kreissegmentförmigen Querschnitt auf. Er lässt sich somit um den kreisrunden Rotor schieben. Der Antrieb des Luftmengenbegrenzers 21 erfolgt vorzugsweise durch einen - nicht dargestellten - Antrieb. Dieser Antrieb wird durch die Windgeschwindigkeit gesteuert. In einer weiteren - nicht dargestellten - Ausführungsform kann der Antrieb ebenfalls die Stellung der Rotorblätter 12 beeinflussen.

Die erfindungsgemäße Vorrichtung sollte möglichst optimal gegen die Windrichtung 23 ausgerichtet sein. Eine optimale Ausrichtung ist immer dann gegeben, wenn die Lufteintrittsöffnungen direkt gegen die Windrichtung 23 gerichtet sind. Durch das Luftlenkblech 15 werden die Luftmassen so optimal gegen die Rotorblätter geleitet.

### Bezugszeichen

- 10: Windkraftanlage
- 11: Rotor
- 12: Rotorblatt
- 13: Generator
- 14: Verkleidung
- 15: Luftlenkblech
- 16: Lufteintrittsöffnung
- 17: Luftaustrittsöffnung
- 18: Rotorachse
- 19: Lagerring
- 20: Mitnehmer
- 21: Luftmengenbegrenzer
- 22: Mast
- 23: Windrichtung
- 24: Bestehende Windkraftanlage
- 25: Generatorgehäuse der bestehenden Windkraftanlage

## Patentansprüche

1. Windkraftanlage, die sich auf einem Lagerring (19) um einen Mast (22) erstreckt,
- mit zwei Rotoren (11), die Rotorblätter (12) aufweisen, wobei die Rotoren (11) beidseitig vom Mast (22) und rotierbar auf dem Lagerring (19) angeordnet sind,
- mit einem Luftlenkblech (15), dass sich bereichsweise um den Mast (22) erstreckt und rotierbar auf dem Lagerring (19) angeordnet ist, wobei das Luftlenkblech (15) so ausgerichtet ist, dass die gegen den Mast strömende Luft (23) auf die Rotorblätter (12) umgleitet wird.

2. Windkraftanlage nach dem vorhergehenden Anspruch, **dadurch in gekennzeichnet, dass** die Rotoren (11) in einer Verkleidung (14) angeordnet sind, wobei die Verkleidung (14) Lufteintrittsöffnungen (16) und Luftaustrittsöffnungen (17) aufweist.

3. Windkraftanlage nach dem vorhergehenden Anspruch, **dadurch gekennzeichnet, dass** die Fläche der Luftaustrittsöffnungen (17) geringer ist als die Fläche der Lufteintrittsöffnungen, um hierdurch einen Sogeffekt auszulösen.

4. Windkraftanlage nach einem oder mehreren der vorhergehenden Ansprüche, **dadurch gekennzeichnet, dass** in der Verkleidung (14) ein Luftmengenbegrenzer (21) angeordnet ist, der die durch die Verkleidung strömende Luftmenge, die auf den Rotor aufschlägt,steuert.

5. Windkraftanlage nach dem vorhergehenden Anspruch, **dadurch gekennzeichnet, dass** der Luftmengenbegrenzer (21) in Form eines Blechs ausgebildet ist, dass zwischen dem Rotor (11) und der Lufteintrittsöffnung (16) anordenbar ist.

6. Windkraftanlage nach einem oder mehreren der vorhergehenden Ansprüche, **dadurch gekennzeichnet, dass** das Luftlenkblech (15) durch einen Antrieb gesteuert wird.

7. Windkraftanlage nach einem oder mehreren der vorhergehenden Ansprüche, **dadurch gekennzeichnet, dass** die Rotorachsen (18) parallel zum vertikal ausgerichteten Mast (22) angeordnet sind, wobei der Rotor die Form eines Schaufelrades aufweist.

8. Windkraftanlage nach einem oder mehreren der vorhergehenden Ansprüche, **dadurch gekennzeichnet, dass** die Rotorachsen (18) horizontal zum vertikal ausgerichteten Mast (22) angeordnet sind, wobei der Rotor die Form eines Propellers aufweist.

9. Windkraftanlage nach einem oder mehreren der vorhergehenden Ansprüche, **dadurch gekennzeichnet, dass** ein Mitnehmer (20) eine Verbindung zwischen dem drehbar gelagerten Generatorgehäuse (25) der bereits vorhandenen Windkraftanlage (10) und den auf dem Lagerring (19) drehbar gelagerten Rotoren (11) herstellt.

10. Windkraftanlage nach einem oder mehreren der vorhergehenden Ansprüche, **dadurch gekennzeichnet, dass** das Luftlenkblech (15) im Scheitelpunkt spitz zulaufend ausgebildet ist, um den auf den Mast (22) strömenden Luftstrom aufzuteilen.
